# EUROPEAN PATENT APPLICATION

(11) **EP 2 629 177 A1**
(43) Date of publication of application: **21.08.2013**
(21) Application number: 12155777.1
(22) Date of filing: 16.02.2012
(51) Int. Cl.: G06F 3/01, H04N 21/41, H04N 21/422

(54) **Portable electronic device and method**

(71) Applicant: Research In Motion Limited, Waterloo, ON N2L 3W8 (CA)
(72) Inventor: Pasquero, Jerome, Waterloo, Ontario N2L 3W8 (CA); Walker, David, Ryan, Waterloo, Ontario N2L 3W8 (CA); Fyke, Steven, Henry, Waterloo, Ontario N2L 3W8 (CA)
(74) Representative: MERH-IP Matias Erny Reichl Hoffmann

(57) **Abstract**

A portable electronic device and method for controlling a media device is provided. The portable electronic includes a camera, a processor in communication with the camera, and an input device in communication with the processor. The processor is for receiving data from the camera and for analyzing the data to detect a condition and the processor is configured to operate in a non-command state or in a command state. The method involves receiving data from a camera, analyzing the data from the camera to detect a condition, receiving input and transmitting a command to the media.

## Description

### FIELD

The present specification relates generally to portable electronic devices, and more particularly to a portable electronic device for controlling a media device,

### BACKGROUND

The evolution of computers is currently quite active in the portable electronic device environment. It is now well-known for a portable electronic device to communicate with another device. Indeed, there has been a veritable explosion in the number and type of portable electronic devices that are configured to communicate with other devices using various means and for various purposes.

### SUMMARY

In accordance with an aspect of the specification, there is provided a portable electronic device for controlling a media device. The portable electronic device includes a camera. The portable electronic device further includes a processor in communication with the camera. The processor is for receiving data from the camera and for analyzing the data to detect a condition, the processor configured to operate in a non-command state when the condition is absent and in a command state when the condition is present. The portable electronic device also includes an input device in communication with the processor. The input device is configured to receive input corresponding to a command for the media device. In addition, the portable electronic device includes an interface in communication with the processor. The interface is configured to transmit the command to the media device when the processor is operating in the command state.

The processor may be configured to analyze the data to detect data corresponding to attention directed at the portable electronic device.

The data corresponding to attention may include eye contact with the camera.

The input device may include the camera.

The input device may include a microphone.

The portable electronic device may further include a proximity sensor configured to determine if the portable electronic device and the media device are within an operating distance.

The portable electronic device may further include a memory configured to store media content for transmitting to the media device.

In accordance with an aspect of the specification, there is provided a method for controlling a media device using a portable electronic device. The method includes receiving data from a camera. The method further includes analyzing the data from the camera to detect a condition. The method also includes receiving input corresponding to a command for the media device. In addition, the method includes transmitting the command to the media device when the condition is present.

Analyzing may involve detecting data corresponding to attention directed at the portable electronic device.

Receiving the input corresponding to a command may involve receiving the input from the camera.

Receiving the input may include receiving input representing a gesture.

Receiving the input corresponding to a command may involve receiving the input from a microphone.

The method may further involve determining whether the portable electronic device is within an operating distance from the media device.

The method may further involve transmitting media content from the portable electronic device to the media device.

In accordance with an aspect of the specification, there is provided a non-transitory computer readable medium encoded with codes. The codes are for directing a processor to receive data from a camera. The codes are also for directing a processor to analyze the data from the camera to detect a condition. In addition, the codes are also for directing a processor to receive input corresponding to a command for the media device. Furthermore, the codes are also for directing a processor to transmit the command to the media device when the condition is present.

### BRIEF DESCRIPTION OF THE DRAWINGS

Reference will now be made, by way of example only, to the accompanying drawings in which:

Figure 1 is a perspective view of a system in accordance with an embodiment;

Figure 2 is a front view of a portable electronic device in accordance with an embodiment;

Figure 3 is a schematic block diagram of the portable electronic device shown in Figure 2;

Figure 4 is a flow chart of a method for controlling a media device in accordance with an embodiment;

Figure 5 is a perspective view of the system shown in Figure 1 with a portable electronic device in a command state;

Figure 6 is a perspective view of the system shown in Figure 1 with a portable electronic device in a non-command state;

Figure 7 is a front view of a portable electronic device in accordance with another embodiment;

Figure 8 is a schematic block diagram of the portable electronic device shown in Figure 7;

Figure 9 is a schematic block diagram of a portable electronic in accordance with another embodiment;

Figure 10 is a flow chart of a method for controlling a media device in accordance with another embodiment;

Figure 11 is a front view of a portable electronic device in accordance with another embodiment; and

Figure 12 is a schematic block diagram of the portable electronic device shown in Figure 7.

### DETAILED DESCRIPTION OF THE EMBODIMENTS

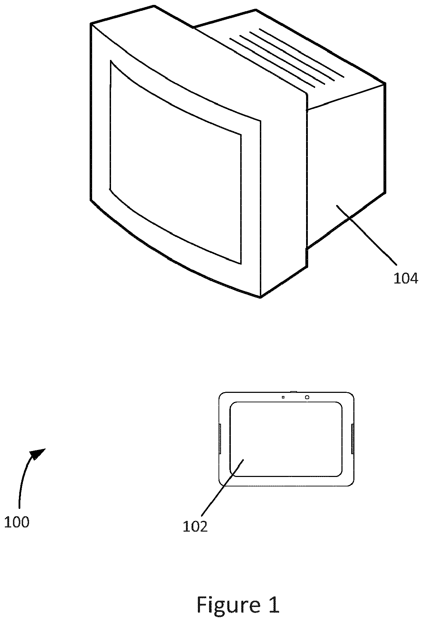

Referring now to Figure 1, a schematic representation of a non-limiting example of a system 100 for receiving input and providing media content. The system 100 includes a portable electronic device 102 for receiving input and a media device 104 for providing media content. It is to be understood that the system 100 is purely exemplary and it will become apparent to those skilled in the art that a variety of systems are contemplated. The system includes a media device 104 and a portable electronic device 102.

The media device 104 is not particularly limited to any one type of device and can include a wide variety of devices configured to provide media content. In the embodiment shown in Figure 1, the media device 104 is a television set. In other embodiments, the media device can be a radio system, projector, computer, optical media disk player, a receiver box, a video game console, or another portable electronic device. In addition, the media content is also not particularly limited and can include audio content and/or visual content. For example, the media content can include passive content, such as a song, a slideshow of pictures, or a television show. In addition, the media content can also include interactive content, such as web content and video games.

In general terms, the portable electronic device 102 is generally configured to control the media device 104. It is to be re-emphasized that the embodiment of the portable electronic device 102 shown in Figure 1 is a schematic non-limiting representation only. For example, although the portable electronic device 102 is shown to be a tablet computing device, the portable electronic device can include wide variety of devices configured to control the media device 104. In other embodiments, a portable electronic device can include a cellular telephone, computer, or a remote control device. Indeed, a plurality of different devices for the portable electronic device 102 is contemplated herein.

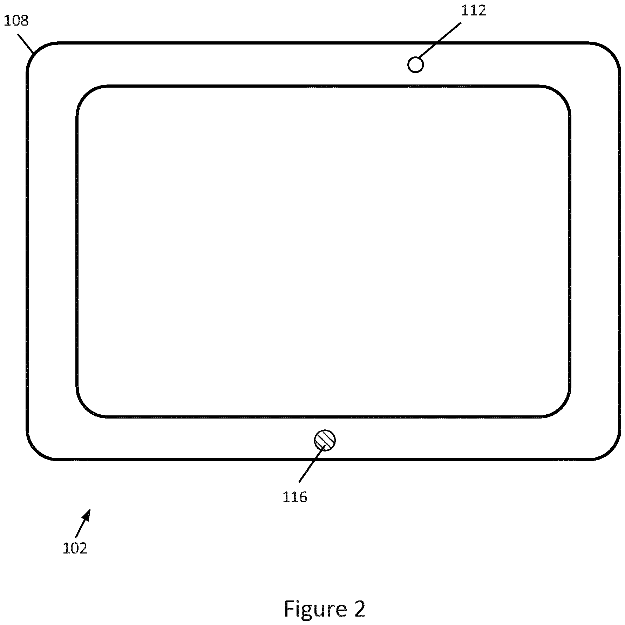

Referring to Figure 2, an embodiment of the portable electronic device 102 is shown in greater detail. It is to be understood that the portable electronic device 102 shown is purely exemplary and it will be apparent to those skilled in the art that a variety of portable electronic devices are contemplated including other embodiments discussed in greater detail below.

In the present embodiment, the portable electronic device 102 includes a chassis 108 for support. In terms of providing physical support, the chassis 108 is mechanically structured to house the internal components (discussed below) of the portable electronic device 102, and a camera 112 and input device 116. Furthermore, the chassis is configured to allow the camera 112 to receive optical data representing images and to allow the input device 116 to receive the appropriate input, which will be discussed in greater detail below. For example, in the present embodiment shown in Figure 2, the chassis 108 includes openings around the camera 112 and the input device 116. In other embodiments, the chassis 108 can be modified to include a protective barrier which permits the camera 112 and the input device 116 to function through the protective barrier, such as a clear piece of plastic or fine wire mesh.

The camera 112 is generally configured to capture optical data representing images and/or video. It is to be understood that the particular type of camera is not particularly limited and includes most digital cameras currently in use in various electronic devices. In the present embodiment, the camera 112 can be fixed relative to the structure or the camera 112 can be adjustable to establish a line of sight for capturing a condition. In other embodiments, the camera 112 can be modified such that the camera is separate from the chassis 108.

The input device 116 is generally configured to receive input corresponding to a command for the media device 104. It is to be understood that a wide variety of input devices are contemplated to receive the input corresponding to the command. For example, the input device 116 can be a microphone configured to receive audio input, such as a voice instruction, corresponding to a command for the media device 104. For embodiments which accept voice instructions, the processor 150 would generally use a speech recognition algorithm to interpret the voice instructions received by the input device 116. As another example, the input device 116 can be a second camera configured to receive optical input corresponding to a command for the media device 104, such as an image of a hand signal or video of a gesture, such as a hand gesture. In other embodiments, the input device can include a button (not shown) or a controller (not shown) connected to the portable electronic device 102 either using wires or wirelessly.

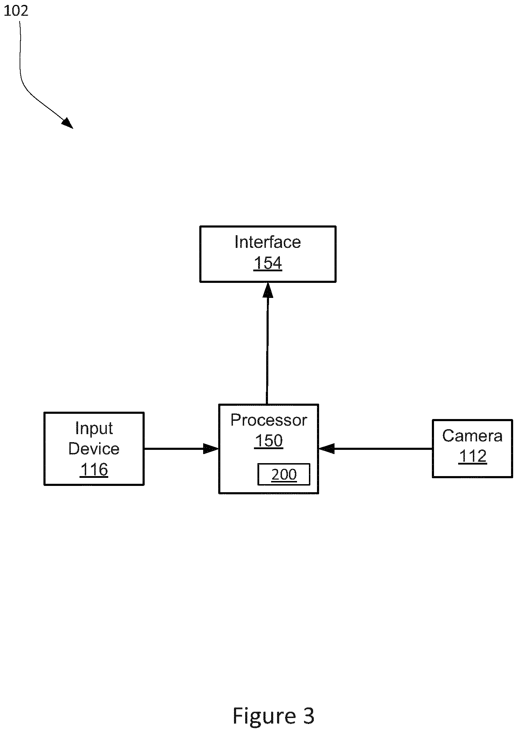

Referring now to Figure 3, a schematic block diagram of the electronic components of the portable electronic device 102 is shown. It should be emphasized that the structure in Figure 3 is purely exemplary. As shown, the camera 112 and the input device 116 are in communication with a processor 150. In addition, the processor 150 is also in communication with an interface 154.

The processor 150 is generally configured to be in communication with the camera 112, the input device 116, and the interface 154. The processor 150 is configured to execute programming instructions 200 for receiving data from the camera 112. The programming instructions 200 further cause the processor 150 to analyze the data from the camera to detect whether a condition is present. The condition is not particular limited and can be chosen to be any feature found in the data from the camera 112. In the present embodiment, the condition can include a subset of the data corresponding to attention directed at the portable electronic device 102. For example, if the data represents a series of images, attention directed at the portable electronic device 102 can include a subset of data representing eye contact of an eye with the portable electronic device 102. In the present embodiment, eye contact includes a line of sight between the eye and the camera 112 and having the portable electronic device 102 centered in the eye's field of view. Therefore, eye contact can be detected by analyzing the position of an eye in a still image. Alternatively, detecting eye contact can involve programming instructions 200 which include an eye-tracking algorithm configured to analyze a video or series of images. In other embodiments, attention directed at the portable electronic device 102 can include a hand signal, such as a raised hand or a finger pointing at the portable electronic device 102. In yet other embodiments, the condition can include identifying a face using facial recognition, or a series of gestures directed at the portable electronic device 102.

It is to be understood that using facial recognition allows the portable electronic device 102 to be locked. To unlock the device, a specific face is captured by the camera 112 and recognized by the processor 150 using facial recognition software. Without the face, the portable electronic device 102 remains lock such that the portable electronic device 102 remains in a non-command state unable to transmit commands to the media device. It is to be appreciated that instead of facial recognition, other means of unlocking the portable electronic device 102 are contemplate. For example, a series of hand gestures can be used to unlock the portable electronic device 102. The ability to lock the portable electronic device 102 can be used to prevent unauthorized control of the media device 104 in applications such as parental locks or media devices 104 and portable electronic devices 102 placed in public areas.

The programming instructions 200 further configure the processor 150 to correlate the input received by the input device 116 with the corresponding command for the media device 104. For example, if the input received by the input device 116 corresponds to the command to increase the volume of the media device 104, the processor 150 is configured to correlate the input with the command to increase the volume and subsequently transmit the command, via the interface 154, to the media device 104. The means by which the programming instructions 200 configure the processor 150 to correlate a specific input with the corresponding command is not particularly limited. For example, the processor 150 can access a database either locally or remotely where a table correlating a plurality of inputs to a plurality of commands is stored. In another example, the command can simply be the input received by the input device 116, such that the input is passed onto the media device 104 without processing at the portable electronic device 102.

Furthermore, the programming instructions 200 further configure the processor 150 to operate in a command state when the condition is detected as being present in the data. When in the command state, the processor 150 is configured to send a command to the media device 104, via the interface 154. The processor 150 is also configured to operate in a non-command state when the condition is absent from the data. When in the non-command state, the processor 150 is configured to not send any commands to the media device 104. It is to be appreciated that operating in one of the command state or the non-command state based on the determination of a condition reduces the likelihood of accidentally transmitting a command from the portable electronic device 102. Therefore, in the present embodiment, if a plurality of inputs corresponding to a plurality of commands includes a hand gesture such as a finger movement, the processor 150 will not send the corresponding command to the media device 104 if input representing the hand gesture is received by the processor 150 without the condition being present. In particular, if input representing a hand gesture which corresponds to a command results from a reaction to content provided by the media device 104, there is generally no intention to have the portable electronic device 102 transmit a command to the media device 104. For example, the reaction could be an emotional reaction, such raising a hand in response to a sports team scoring a goal, which also corresponds to a command, such as increasing the volume of the media device 104.

It is to be appreciated that if the condition includes establishing eye contact with the portable electronic device 102, emotional reactions to content provided by the media device 104 would generally not result in the transmission of a command because eye contact would generally be maintained with the media device 104 instead of the portable electronic device 102. In order to transmit a command to the media device 104, eye contact is established with the portable electronic device 102 before providing input representing the hand gesture.

It is to be further appreciated that in the present embodiment, placement of the portable electronic device 102 at a location that is not in line with the media device 104 will further reduce accidental transmissions of commands to the media device 104 by reducing unintentional detections of eye contact. However, it is to be understood that programming instructions 200 having improved eye-tracking algorithms can also be used to reduce accidental transmissions of commands from the portable electronic device 102.

The interface 154 is generally configured to transmit a command from the processor 150 to the media device 104. The means by which the interface 154 transmits the command is not particularly limited and can include transmission over a network through a server (not shown) or communicating directly with the media device 104 using a peer-to-peer network connection. For example, commonly employed network architectures for transmission include, but are not limited to, Global System for Mobile communication ("GSM"), General Packet Relay Service ("GPRS"), Enhanced Data Rates for GSM Evolution ("EDGE"), 3G, High Speed Packet Access ("HSPA"), Code Division Multiple Access ("CDMA"), Evolution-Data Optimized ("EVDO"), Institute of Electrical and Electronic Engineers (IEEE) standard 802.11 (Wifi^{™}), Bluetooth^{™} or any of their variants or successors. It is also contemplated that the interface 154 can include multiple radios to accommodate the different protocols that can be used to implement different types of links.

In general terms, the portable electronic device 102 is generally configured for controlling a media device 104 in response to inputs received by an input device 116. However, it is to be re-emphasized that the structure shown in Figures 2 and 3 are schematic, non-limiting representations only. For example, although the portable electronic device 102 shown in Figure 3 only includes the single interface 154, it is to be understood that the portable electronic device 102 can be modified to include a plurality of interfaces where each interface is configured to transmit commands to separate media devices. Therefore, it is to be understood that the portable electronic device can be configured to control a plurality of media devices simultaneously. For example, the portable electronic device can be configured to control a television set and a stereo system simultaneously. Furthermore, it is also to be understood that in some embodiments, the same interface 154 can be used to control more than one media device. In addition, multiple interfaces can be used to allow for communication using different network architectures. For example, the portable electronic device 102 can be capable of communicating with media devices either through a network connection such as Wifi^{™} or using a Bluetooth^{™} connection.

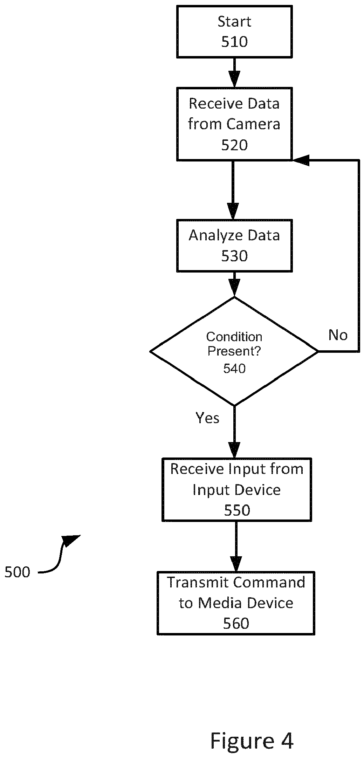

Referring now to Figure 4, a method for controlling a media device 104 using a portable electronic device 102 is represented in the form of a flow-chart and indicated generally at 500. Method 500 can be implemented generally as part of the operating system of the portable electronic device 102 or as part of a specific application running on the portable electronic device.

Block 510 is the start of the method 500. The manner in which the method 500 is started is not particularly limited. For example, the method 500 can start when the portable electronic device 102 is powered on and run in the background. Alternatively, the method 500 can also begin when an application is executed, or at a specified time. It will now also be appreciated that the method 500 will generally be continuously running such that as soon as the method ends, the method will start again. By continuously running the method 500, the portable electronic device 102 is constantly determining whether the condition is present such that when the condition is detected as being present, the processor 150 will enter a command state for transmitting commands to the media device, while remaining in the non-command state when the condition is absent.

Block 520 comprises receiving data from the camera 112. The manner in which the data is received is not particularly limited. The camera 112 is generally configured to capture electromagnetic signals from the environment which can be used to generate data representing an image of the environment in front of the camera 112. The camera 112 subsequently provides the processor 150 with the data representing an image of the environment in front of the camera. In the present embodiment, the camera 112 is integrated into the portable electronic device 102 and in communication with the processor 150 via an internal bus (not shown). In other embodiments, the camera 112 can be an external device connected to the processor 150 via a wired or wireless connection.

Block 530 comprises analyzing the data from the camera 112 to detect a condition. The condition is not particularly limited and can include anything in the environment which is present in a subset of the data from the camera 112. Furthermore, depending on the condition, various different means can be used to detect whether the condition is present. In the present embodiment, the condition can be attention directed at the portable electronic device 102 in the form of eye contact. In order to determine whether eye contact between an eye and the portable electronic device 102 is present, data representing an image can be analyzed to determine first if an eye is present in the image and then if the portable electronic device 102 would be in the center of the eye's field of view. Alternatively, an eye-tracking algorithm can also be used to track the gaze of an eye to determine when the gaze is focused on the portable electronic device 102. In another embodiment, such as where the condition is based on facial recognition, a facial recognition algorithm can be used to determine whether a particular face is present in a subset of the data.

Next, Block 540 comprises determining whether the condition is present in the data representing the image in front of the camera 112. The determination is made by the processor 150 after analyzing the data to detect the condition. After the algorithm has completed analyzing an image, the processor 150 will determine whether the analysis resulted in the condition being detected. In the present embodiment, a determination by the processor 150 that the condition is present leads to Block 550. In general, the determination by the processor 150 that the condition is present will cause the processor 150 to operate in the command state discussed above.

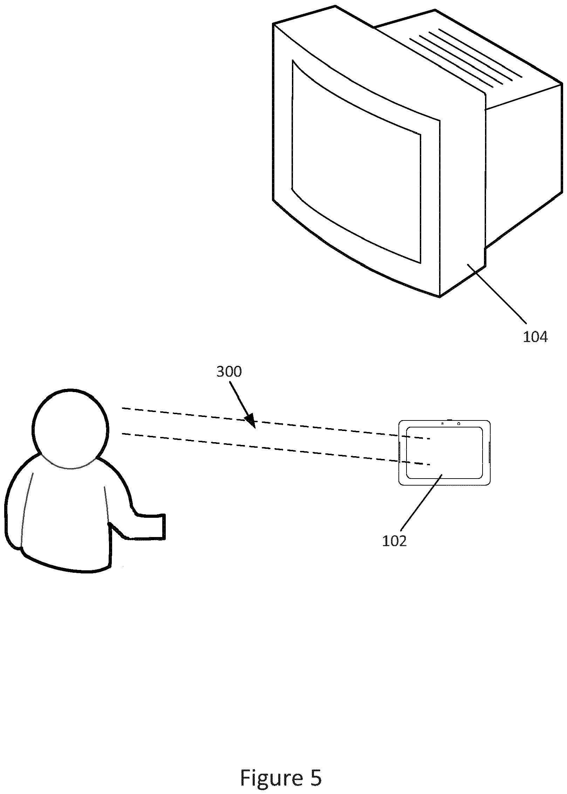

Referring to Figure 5, the portable electronic device 102 is shown in a command state. In this embodiment, a gaze 300 from an eye (not shown) is directed at the portable electronic device 102. Therefore, since the condition is present, the processor 150 operates in a command state. Furthermore, Figure 5 shows a gesture including the raising of an arm, which will be received by the processor 150 in Block 550.

Referring back to Figure 4, if a determination by the processor 150 determines that the condition is absent, the processor 150 will operate in the non-command state and return to Block 520 of the method. It is to be understood that the method 500 will continue this loop until a determination is made by the processor 150 that the condition is present.

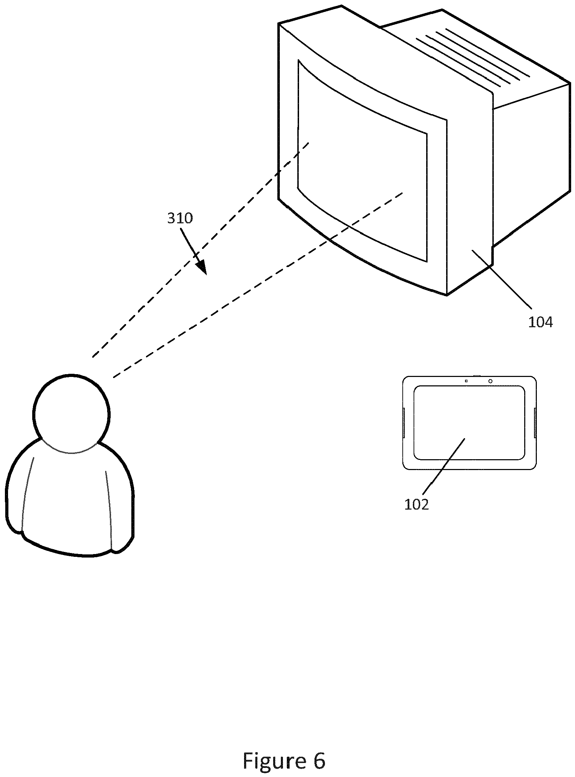

Referring to Figure 6, the portable electronic device 102 is show in a non-command state. In this embodiment, a gaze 310 from an eye (not shown) is directed at the media device 104. Therefore, input representing any gestures received by the processor 150 in the non-command state will generally not be intended to control the media device 104. Accordingly, no commands will be transmitted from the portable electronic device 102 to the media device 104.

Referring back to Figure 4, Block 550 comprises receiving input corresponding to a command for the media device 104. It is to be understood that a wide variety of inputs are contemplated to be received. For example, the input can be audio input, such as a voice instruction, corresponding to a command for the media device 104. In another example, the input can be optical input corresponding to a command for the media device 104, such as a subset of data representing an image of a hand signal or video of a gesture, for example, a finger movement. In the present embodiment, Block 550 is only invoked when the processor is in a command state. Therefore, it is to be understood that the processor 150 will only receive input from the input device 116 when the processor is in the command state. It will be appreciated that an advantage of receiving input only when the processor 150 is in a command state is the conserving of resources of the portable electronic device 102 by allowing the input device 116 to be powered down while the processor 150 is in the non-command state.

Although the present embodiment of method 500 shows that input is received only when the processor 150 is in a command state, variants are possible. For example, a variant of method 500 can switch the positions of Block 540 and Block 550 such that the processor 150 constantly receives input from the input device 116. In this variant, although input can be received by the processor 150, the corresponding command will not be transmitted to the media device 104 unless the condition is present. It is to be appreciated that the advantage of this variant is that the implementation of this variant can be easier since the input device 116 is not turned on or turned off when the processor 150 switches between the command state and the non-command state. Instead, the input device 116 can remain on and detect all input whether or not a command will be transmitted to the media device 104. It is to be appreciated that the probability of an accidental transmission of a command to from the portable electronic device 102 to the media device 104 for this variant would be the same as in the method 500 as shown in Figure 4.

Block 560 comprises transmitting the command to the media device 104. It is to be understood that in order to reach Block 560, the condition was determined to have been present in the data from the camera 112. Once the processor 150 receives the input corresponding to a command for the media device 104, the processor transmits the command to the media device 104 via the interface 154. In the present embodiment, the command can be determined by the processor 150 by referring to a table stored locally on the portable electronic device 102. In other embodiments, the processor 150 can simply relay the input received from the input device 116 in an unprocessed form to the media device 104, which subsequently processes the input. The manner in which the data is transmitted is not particularly limited and several different transmission means are contemplated. For example, commonly employed network architectures for such a link include, but are not limited to, Global System for Mobile communication ("GSM"), General Packet Relay Service ("GPRS"), Enhanced Data Rates for GSM Evolution ("EDGE"), 3G, High Speed Packet Access ("HSPA"), Code Division Multiple Access ("CDMA"), Evolution-Data Optimized ("EVDO"), Institute of Electrical and Electronic Engineers (IEEE) standard 802.11 (Wifi^{™}), Bluetooth^{™} or any of their variants or successors.

It is to be understood that the method 500 is configured to loop optionally back to the start at Block 510 to provide for continuous control of the media device 104.

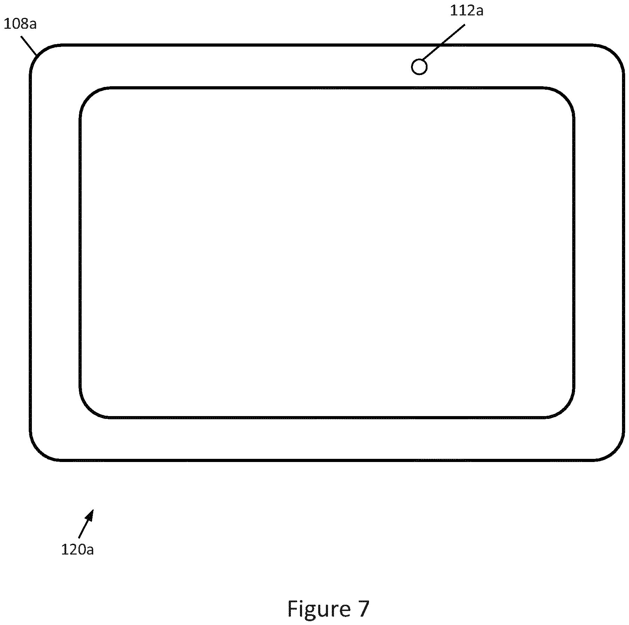

Referring to Figure 7, another embodiment of a portable electronic device 102a is generally shown. Like components of the portable electronic device 1 02a bear like reference to their counterparts in the portable electronic device 102, except followed by the suffix "a". The portable electronic device 102a includes a chassis 108a for supporting a camera 112a. The chassis 108a is configured to allow the camera 112a to capture optical data representing images.

In the present embodiment shown in Figure 7, the camera 112a is generally configured to capture optical data representing images and video. It is to be understood that the particular type of camera is not particularly limited and can include types described above in regard to the camera 112.

In addition, the camera 112a is also generally configured to receive input corresponding to a command for the media device 104. The optical input received by the camera can correspond to a command for the media device 104. For example, an image of a hand signal or video of a gesture, such as a hand gesture can correspond to a command for the media device 104. It is to be appreciated that in this embodiment, the camera 112a serves a similar function as the input device 116 of the previous embodiment. Therefore, it will be appreciated that the portable electronic device 1 02a of the present embodiment would require at least one less component than the portable electronic device 102.

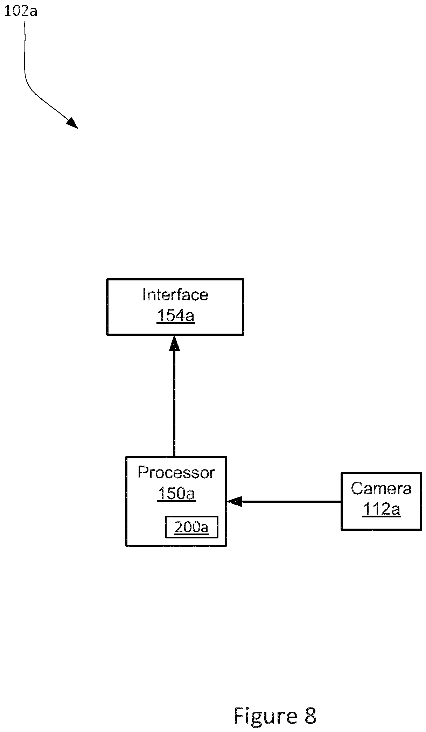

Referring now to Figure 8, a schematic block diagram of the electronic components of the portable electronic device 102a is shown. The camera 112a is in communication with a processor 150a. The camera 112a provides the data for determining the presence of a condition and the input corresponding to a command to the processor 150a. In addition, the processor 150a is also in communication with an interface 154a.

The processor 150a is generally configured to execute programming instructions 200a for performing similar functions as the processor 150 described above with only the following minor exceptions.

In general terms, the portable electronic device 102a is generally configured controlling a media device 104 in response to inputs received by the camera 112a. It is to be understood that the portable electronic devices 102 and 1 02a operate in substantially the same way and that the portable electronic device 102a is configured to carry out method 500 as well by having the camera 112a function as both the camera 112 and the input device 116 of the portable electronic device 102. Therefore, it is to be understood that the portable electronic device 102a can include fewer components to reduce costs as well as the level of required manufacturing resources.

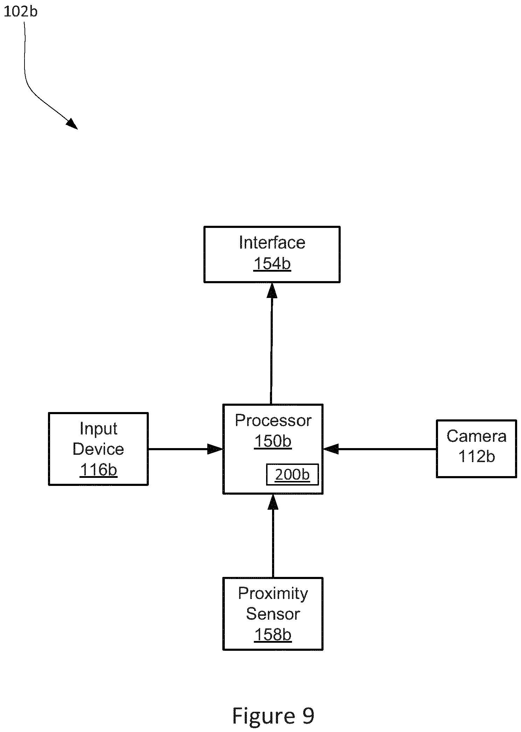

Referring to Figure 9, a schematic block diagram of the electronic components of another embodiment of a portable electronic device 102b is generally shown. Like components of the portable electronic device 102b bear like reference to their counterparts in the portable electronic device 102, except followed by the suffix "b". The portable electronic device 102b includes a processor 150b in communication with an input camera 112b, device 116b, interface 154b, and a proximity sensor 158b.

The processor 150b is generally configured to execute programming instructions 200b for performing similar functions as the processors 150 and 150a described above with only the following minor exceptions.

The programming instructions 200b further cause the processor 150b to analyze the proximity data from the proximity sensor 158b to determine if the portable electronic device 102b and the media device 104 are within an operating distance. The means by which the determination is made is not particular limited. For example, the proximity sensor can use Radio-frequency Identification (RFID) technology where the operating distance is determined by the range of the reader device (not shown). It is to be understood that the reader device can be disposed in the portable electronic device 102b as part of the proximity sensor 158b, or the reader device can be disposed in the media device 104 for reading a RFID chip disposed in the portable electronic device 102b as part of the proximity sensor 158b. As another example, the proximity sensor can transmit a first signal, such as an ultrasonic signal or an electromagnetic signal, to the media device 104, which returns a second signal in response to the first signal if the media device 104 is within range of the portable electronic device 102b. It is also to be understood that the media device 104 can be configured to send the first signal, in some embodiments. It is to be understood that, in this embodiment, the range of the proximity sensor determines the operating distance and that the range can be adjusted by varying the range of the proximity sensor. Therefore, the portable electronic device 102b and the media device 104 are placed within the operating distance of each other to allow for the portable electronic device 102b to control the media device 104.

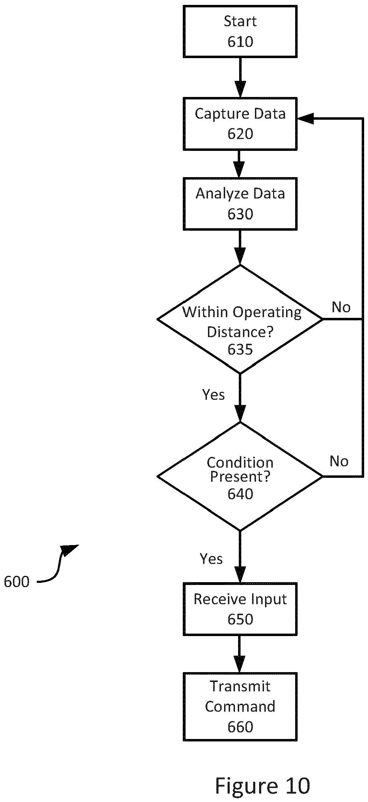

Referring now to Figure 10, a method for controlling a media device 104 using a portable electronic device 102b is represented in the form of a flow-chart and indicated generally at 600. Method 600 can be implemented generally as part of the operating system of the portable electronic device 102b or as part of a specific application running on the portable electronic device.

Block 610 is the start of the method 600. The manner in which the method 600 is started is not particularly limited. For example, the method 600 can start when the portable electronic device 102b is powered on and run in the background. Alternatively, the method 600 can also begin when an application is executed, or at a specified time. It will now also be appreciated that the method 600 will generally be continuously running such that as soon as the method ends, the method will start again. By continuously running the method 600, the portable electronic device 102b is constantly determining whether the condition is present such that when the condition is detected as being present, the processor 650 will enter a command state for transmitting commands to the media device, while remaining in the non-command state when the condition is absent.

Block 620 comprises receiving data from the camera 112b. The manner in which the data is received is not particularly limited and includes the methods similar to those of Block 520.

Block 630 comprises analyzing the data from the camera 112b to detect a condition. The condition is not particularly limited and includes the methods similar to those of Block 520.

Next, Block 635 comprises determining whether the portable electronic device 102b is within an operating distance from the media device 104. The determination is made by the processor 150b after analyzing proximity data from the proximity sensor 158b. For example, the determination can be made by determining whether the proximity sensor 158b is within range of the media device 104. In general, a determination by the processor 150b that the portable electronic device 102b and the media device 104 are within the operating distance will cause the processor 150b to proceed to Block 640. Alternatively, if a determination by the processor 150b determines that the portable electronic device 102b and the media device 104 are not within the operating distance, the processor 150b will operate in the non-command state and return to Block 620 of the method. It is to be understood that the method 600 will continue this loop until a determination is made by the processor 150b that the portable electronic device 102b and the media device 104 are within the operating distance.

Block 640 comprises determining whether the condition is present in the data representing the image in front of the camera 112b. The determination is made by the processor 150 after analyzing the data to detect the condition. After the algorithm has completed analyzing an image, the processor 150b will determine whether the analysis resulted in the condition being detected. In the present embodiment, a determination by the processor 150b that the condition is present leads to Block 650. In general, the determination by the processor 150b that the condition is present will cause the processor 150b to operate in the command state discussed above.

Alternatively, if a determination by the processor 150b determines that the condition is absent, the processor 150b will operate in the non-command state and return to Block 620 of the method. It is to be understood that the method 600 will continue this loop until a determination is made by the processor 150b that the condition is present.

Block 650 comprises receiving input corresponding to a command for the media device 104 and functions similarly to Block 550.

Although the present embodiment of method 600 shows that input is only received only when the processor 150b is in a command state, variants are possible. For example, variants of method 600 can switch interchange the order of Block 635, Block 640 and Block 650.

Block 660 comprises transmitting the command to the media device 104. It is to be understood that in order to reach Block 660, the condition was determined to have been present in the data from the camera 112b and the portable electronic device 102b and the media device 104 are within the operating distance. Once the processor 150b receives the input corresponding to a command for the media device 104, the processor transmits the command to the media device 104 via the interface 154b. For example, the command can be determined by the processor 150b by referring to a table stored locally on the portable electronic device 102b. The manner in which the data is transmitted is not particularly limited and several different transmission means are contemplated.

Furthermore, it is to be understood that the method 600 is configured to loop optionally back to the start at Block 610 to provide for continuous control of the media device 104.

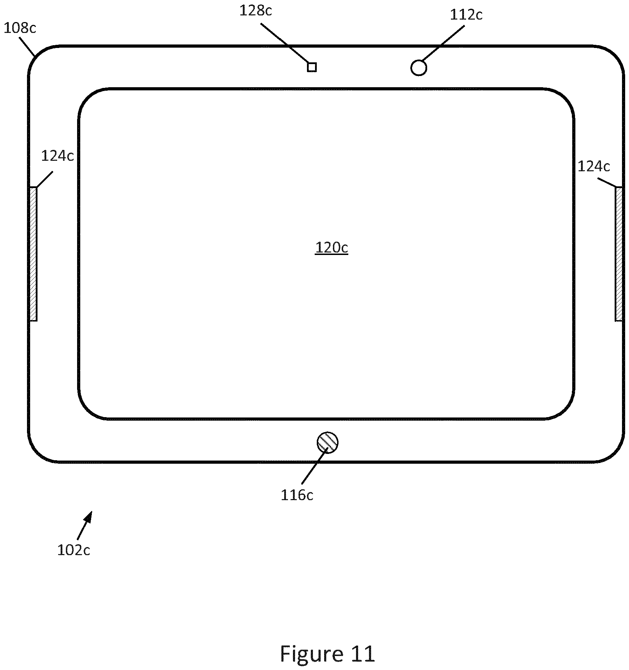

Referring to Figure 11, another embodiment of a portable electronic device 102c is generally shown. Like components of the portable electronic device 1 02c bear like reference to their counterparts in the portable electronic device 102, except followed by the suffix "c".

The portable electronic device 102c comprises a chassis 108c that supports a touchscreen 120c. The touchscreen 120c can comprise one or more light emitters such as an array of light emitting diodes (LED), liquid crystals, plasma cells, or organic light emitting diodes (OLED). Other types of light emitters are contemplated. The portable electronic device 102c also comprises speakers 124c for generating audio output. Furthermore, the portable electronic device 102c also comprises a microphone 116c for receiving audio input. Although the example shows two speakers 124c on the portable electronic device 102c, it will now be appreciated that any number of speakers can be used. The chassis 108c further supports an indicator light 128c for indicating a status of the device. For example, the indicator light 128c can indicate whether the processor is in a command state or non-command state. In addition, the indicator light 128c can be used alternatively or additionally to indicate the state of the battery. Furthermore, the chassis 108c also supports a camera 112c. For example, the camera 112c can be a digital camera capable of capturing images and video, which in turn can be displayed on the touchscreen 120c.

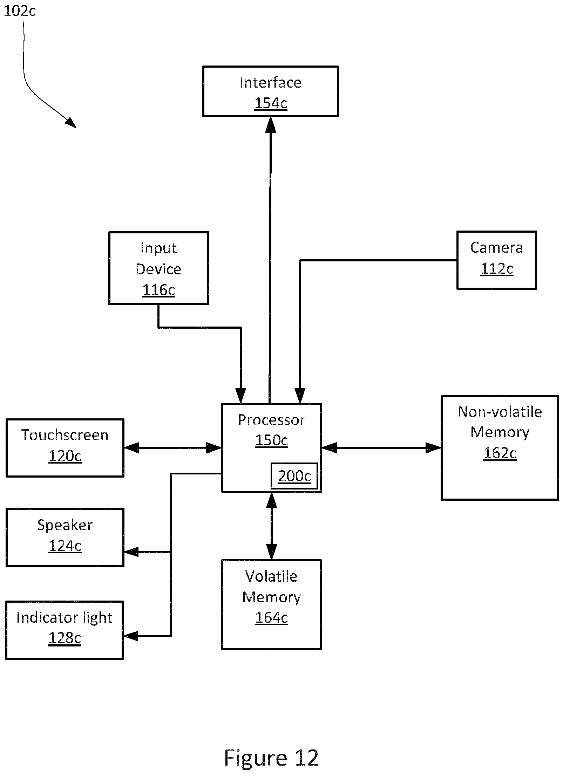

Figure 12 shows a schematic block diagram of the electronic components of the portable electronic device 102c. It should be emphasized that the structure in Figure 12 is purely exemplary. The portable electronic device 102c includes a plurality of input devices which in a present embodiment includes touchscreen 120, the microphone 116c, and the camera 112c, which are all in communication with a processor 150c. Output to the speakers 124c, the indicator light 128c, the touchscreen 120c and the interface 154c are provided by the processor 150c.

Processor 150c can be configured to execute different programming instructions. Therefore, the portable electronic device 1 02c can function as a typical tablet computing device when in a non-command state. To fulfill its programming functions, processor 150c is also configured to communicate with a non-volatile storage unit 162c (e.g. Electrically Erasable Programmable Read Only Memory ("EEPROM"), Flash Memory) and a volatile storage unit 164c (e.g. random access memory ("RAM")). Programming instructions that implement the functional features of the portable electronic device 102c as described herein are typically maintained, persistently, in non-volatile storage unit 162c and used by processor 150c which makes appropriate utilization of volatile storage 164c during the execution of such programming instructions. In addition, it is to be understood that non-volatile storage 162c can also be configured to store information such as media content and/or programming instructions. Those skilled in the art will now recognize that non-volatile storage unit 162c and volatile storage unit 164c are examples of non-transitory computer readable media that can store programming instructions executable on processor 150c.

The interface 154c is generally configured to transmit a command from the processor 150 to the media device 104. The means by which the interface 154c transmits the command is not particularly limited and can include over a network through a server (not shown) or communicating directly with the media device 104 using a peer-to-peer network connection. The interface 154c is also configured to send additional information to the media device 104. For example, the processor 150c can be configured to provide media content from the non-volatile memory 162c to the media device 104 for output. Therefore, the media content will be transmitted from the non-volatile memory 162c to the media device 104, via the interface 154c, where the media content can be consumed. Although the media content can generally be consumed on the portable electronic device, it is often desirable to consume the content on the media device 104 because the media device generally includes a larger screen and better sound system than the portable electronic device 102c.

It is to be understood that variations of the portable electronic devices described above are contemplated. As a non-limiting example, the portable electronic device 102c can combine the feature of the portable electronic device 102a where the camera receives both the input corresponding to a command as well as data for determination if a condition is present.

Various advantages will now be apparent. Of note is the ability to control a media device using various inputs such as gestures when a condition is present. By detecting whether a condition is present, unintentional input received by the portable electronic device will not result in a command being sent to the media device.

While specific embodiments have been described and illustrated, such embodiments should be considered illustrative only and should not serve to limit the accompanying claims.

## Claims

1. A portable electronic device for controlling a media device, the portable electronic device comprising:
a camera;
a processor in communication with the camera, the processor for receiving data from
the camera and for analyzing the data to detect a condition, the processor configured to operate in a non-command state when the condition is absent and in a command state when the condition is present;
an input device in communication with the processor, the input device configured to
receive input corresponding to a command for the media device; and
an interface in communication with the processor, the interface configured to transmit
the command to the media device when the processor is operating in the command state.

2. The portable electronic device of claim 1, wherein the processor is configured to analyze the data to detect data corresponding to attention directed at the portable electronic device.

3. The portable electronic device of claim 2, wherein the data corresponding to attention comprises eye contact with the camera.

4. The portable electronic device of claim 1, 2, or 3, wherein the input device includes the camera.

5. The portable electronic device of any one of claims 1 to 4, wherein the input device comprises a microphone.

6. The portable electronic device of any one of claims 1 to 5, further comprising a proximity sensor configured to determine if the portable electronic device and the media device are within an operating distance.

7. The portable electronic device of any one of claims 1 to 6, further comprising a memory configured to store media content for transmitting to the media device.

8. A method for controlling a media device using a portable electronic device, the method comprising:
receiving data from a camera;
analyzing the data from the camera to detect a condition;
receiving input corresponding to a command for the media device; and
transmitting the command to the media device when the condition is present.

9. The method of claim 8, wherein analyzing comprises detecting data corresponding to attention directed at the portable electronic device.

10. The method of claim 8 or 9, wherein receiving the input corresponding to a command comprises receiving the input from the camera.

11. The method of claim 10, wherein receiving the input comprises receiving input representing a gesture.

12. The method of any one of claims 8 to 11, wherein receiving the input corresponding to a command comprises receiving the input from a microphone.

13. The method of any one of claims 8 to 12, further comprising determining whether the portable electronic device is within an operating distance from the media device.

14. The method of any one of claims 8 to 13, further comprising transmitting media content from the portable electronic device to the media device.

15. A non-transitory computer readable medium encoded with codes, the codes for directing a processor to:
receive data from a camera;
analyze the data from the camera to detect a condition;
receive input corresponding to a command for the media device; and
transmit the command to the media device when the condition is present.
